# EUROPÄISCHE PATENTSCHRIFT

(11) **EP 1 795 393 B1**
(45) Veröffentlichungstag und Bekanntmachung des Hinweises auf die Patenterteilung: **21.01.2009**
(21) Anmeldenummer: 06023860.7
(22) Anmeldetag: 17.11.2006
(51) Int. Cl.: B60N 2/64, B60N 2/68

(54) **Fahrzeugsitzlehne mit einer Tragstruktur**
Backrest of a vehicle seat having a support structure
Dossier d'un siège de véhicule avec structure de support

(30) Priorität: 07.12.2005 DE 102005058311
(43) Veröffentlichungstag der Anmeldung: 13.06.2007
(73) Patentinhaber: AUDI AG, 85045 Ingolstadt (DE)
(72) Erfinder: Eisenschmid, Franz, 91809 Konstein (DE); Knapp, Christoph, 74172 Neckarsulm (DE)
(74) Vertreter: Engelhardt, Harald

(56) Entgegenhaltungen:
- EP-A- 1 674 335
- FR-A1- 2 837 151

## Beschreibung

Die Erfindung bezieht sich auf eine Fahrzeugsitzlehne mit einer Tragstruktur, mit mindestes einem an der Tragstruktur festgelegtem Schaumteil und mit einem Aufnahmeteil für die Halteelemente einer Kopfstütze. Eine derartige Sitzlehne ist aus der FR-A1-2 837 151 bekannt.

Fahrzeugsitzlehnen, bei denen auf eine Tragstruktur ein Schaumteil aufgebracht ist, sind in den vielfältigsten Variationen bekannt und werden in großer Stückzahl bei Kraftfahrzeugen eingesetzt. Üblicherweise werden derartige Fahrzeugsitzlehnen dadurch montiert, dass nach Befestigung eines vorderen Schaumteiles dieses überzogen und anschließend ein Rückenteil angefügt wird. Durch an sich bekannte Halteelemente erfolgt anschließend die Befestigung der Kopfstütze, sofern diese nicht integraler Bestandteil der Sitzlehne ist.

Die beschriebene Vorgehensweise bedingt starre Abläufe beim Sitz- oder Fahrzeughersteller, die oftmals einzelne Komponenten, beispielsweise die Schaumteile, zugeliefert erhalten.

Der vorliegenden Erfindung liegt die Aufgabe zugrunde, mit einfachen Mitteln eine Fahrzeugsitzlehne mit einer Tragstruktur so auszubilden, dass die zugelieferten Teile reduziert und die Endmontage vereinfacht werden.

Die Aufgabe wird bei einer Fahrzeugsitzlehne der eingangs gennanten Art dadurch gelöst, dass ein vorderes Schaumteil mit einem rückwärtigen, die Kopfstütze und die Halteelemente umfassenden Schaumteil verbunden ist, derart, dass der durch die Schaumteile gebildete Hohlkörper von oben her auf die Tragstruktur der Fahrzeugsitzlehne aufsteckbar ist, wobei beim Aufstecken die Halteelemente der Kopfstütze in zugeordnete Aufnahmeteile an der Tragstruktur eingreifen.

Durch den Aufbau der erfindungsgemäßen Fahrzeugsitzlehne und die damit im Zusammenhang stehende Montageart hat den großen Vorteil, dass der Hersteller der Schaumteile pro Fahrzeugsitz nur eine Zusammenbaugruppe liefert, die von der Firma, die den Fahrzeugsitz komplettiert, also einem Sitzhersteller oder dem Fahrzeughersteller, nur noch auf die Tragstruktur aufgesteckt werden muss. Vorteilhaft ist, dass das rückwärtige Schaumteil auch die Kopfstütze und mit ihr in Verbindung stehende Halteelemente umfasst. Bei Aufstecken des durch die Schaumteile gebildeten Hohlkörper von oben auf die Tragstruktur greifen die Halteelemente der Kopfstütze in die zugeordneten Aufnahmeteile an der Tragstruktur ein, so dass die Kopfstütze ohne zusätzliche Montageschritte zuverlässig an der Tragstruktur der Fahrzeugsitzlehne gehalten ist.

Die in dem rückwärtigen Schaumteil integrierte Kopfstütze kann so ausgeführt sein, dass sie starr, als nicht verstellbar ist. Falls erwünscht, ist es natürlich ebenso möglich, eine in der Höhe und gegebenenfalls auch in der Neigung verstellbare Kopfstütze vorzusehen. Dazu ist es notwendig, in dem vorderen Schaumteil eine entsprechende Aussparung vorzusehen und diese gegebenenfalls durch geeignete Mittel abzudecken.

Durch die vorgeschlagene neue Fahrzeugsitzlehne wird nicht nur die Herstellung und Zulieferung erleichtert; es können auch in einfacher Weise individuelle Anpassungen vorgenommen werden. So lassen sich durch Verwendung unterschiedlicher vorderer und rückwärtiger Schaumteile verschiedene Schaumteile, Materialien und Oberflächen realisieren.

Besonders vorteilhaft ist, wenn das vordere Schaumteil mit dem rückwärtigen Schaumteil zumindest abschnittsweise über eine Nut-Feder-Verbindung zusammengefügt ist. Die Nut-Feder-Verbindung lässt sich bei den Schaumteilen einfach realisieren und stellt zumindest in einer Ebene einen guten Formschluss dar. Bei entsprechender Bemessung der ineinander greifenden Teile lässt sich auch eine gewisse Klemmung erreichen, die zumindest für eine provisorische Fixierung der beiden Schaumteile ausreichend ist. Eine Nut-Feder-Verbindung lässt sich über das Spaltmaß auch in einfacher Weise kontrollieren.

Besonders einfach und zweckmäßig ist, wenn das vordere Schaumteil an dem rückwärtigen Schaumteil durch mindestens eine Rastverbindung gehalten ist. Diese Verbindungsart kommt ohne separate Befestigungsmittel aus und erlaubt sehr kurze Montagezeiten. Die durch eine Rastverbindung der Schaumteile erzielbaren Haltekräfte sind für den vorliegenden Fall meist ausreichend.

Gemäß einer besonders zweckmäßigen Ausgestaltung der Erfindung kann dass vordere Schaumteil mit dem rückwärtigen Schaumteil über gemeinsame Anlageflächen zumindest abschnittsweise verklebt sein. Eine Verklebung kann beispielsweise im Sichtbereich eingesetzt werden, also an Stellen, an denen zuverlässig verhindert werden soll, dass zwischen den beiden Schaumteilen ein Spalt entsteht.

Im Zusammenhang mit einer Verklebung erweist es sich als vorteilhaft, wenn die vorderen und rückwärtigen Schaumteile in ihren oberen Bereichen verklebt und die beiden Schaumteile in den sich nach unten anschließenden Bereichen durch Rastverbindungen fixiert sind. Durch die Verklebung kommen die bereits genannten Vorteile zum Tragen. Die Verklebung im oberen Bereich stört auch nicht die Endmontage, so dass die Verklebung bereits durch den die Schaumteile herstellenden Lieferanten erfolgen kann. Die im oberen Bereich verklebten Schaumteile werden dann bei der Endmontage nur durch Zusammendrücken der Rastverbindungen im unteren Bereich an der Tragstruktur fixiert.

Die Unteransprüche 6 und 7 beinhalten zweckmäßige Ausgestaltungen der Erfindung in Hinblick auf die Ausbildung einer Kopfstütze und die Eigenschaften des vorderen Schaumkörpers.

Ein Ausführungsbeispiel der Erfindung ist in der Zeichnung dargestellt und wird nachfolgend näher beschrieben. Es zeigen
- Fig. 1: in perspektivischer Darstellung eine Fahrzeugsitzlehne mit einem vorderen Schaumteil und einem rückwärtigen, die Kopfstütze aufnehmenden Schaumteil und
- Fig. 2: das rückwärtige Schaumteil aus Fig. 1 als Einzelteil.

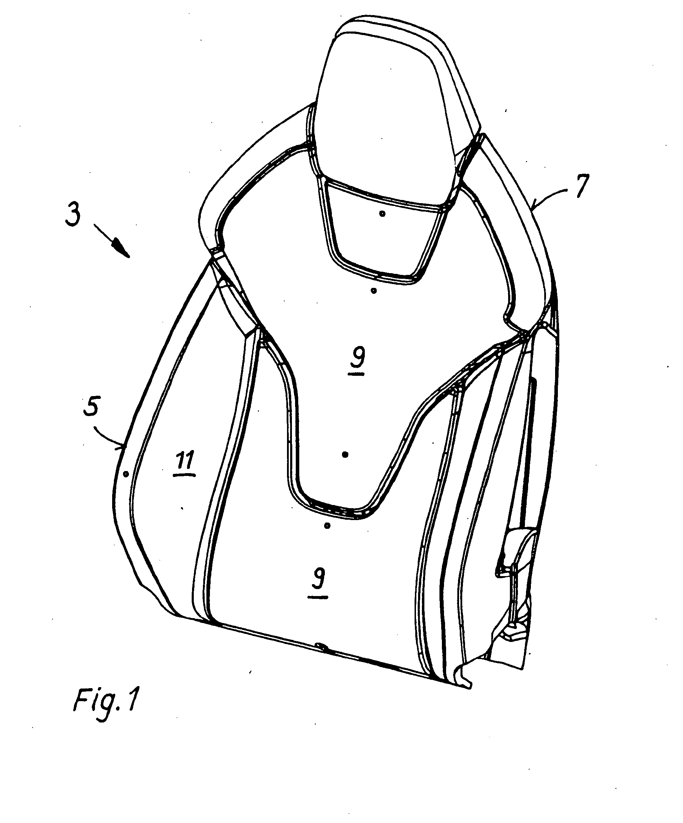

Eine in Fig. 1 dargestellte Fahrzeugsitzlehne 3 setzt sich aus einem vorderen Schaumteil 5 und einem rückwärtigen Schaumteil 7 zusammen. Das vordere Schaumteil 5 umfasst Bereiche unterschiedlicher Schaumhärte. So weist der Anlagebereich 9 für den Rücken des Sitzbenutzers die geringste Schaumhärte auf. Die beiden Seitenwangen 11 der Fahrzeugsitzlehne 3 sind hingegen steifer ausgeführt. Um eine ausreichend hohe Haltekraft im Schulterbereich des Sitzbenutzers zu gewährleisten, ist der obere Abschnitt des rückwärtigen Schaumteiles 7 nochmals härter als die Seitenwangen 11 ausgeführt.

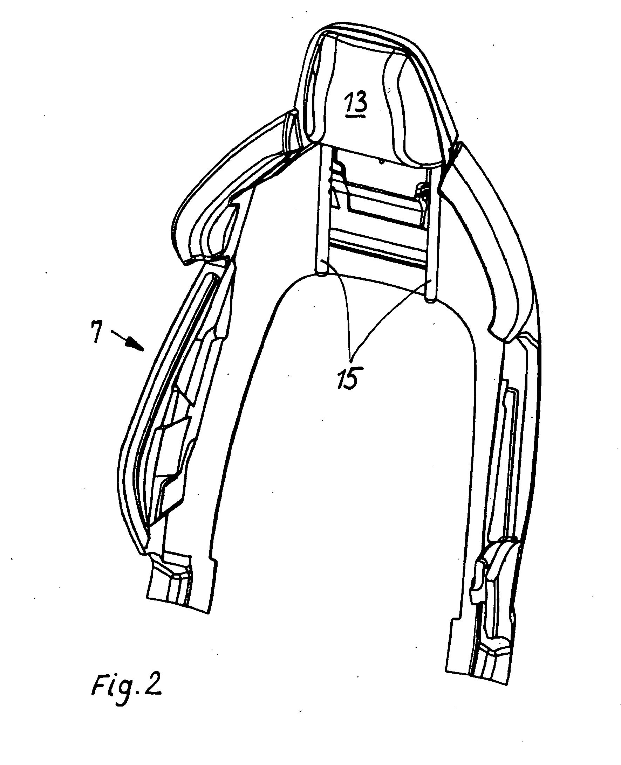

Wie die Fig. 2 zeigt, umfasst das rückwärtige Schaumteil in seinem oberen Abschnitt auch eine Kopfstütze 13 und mit ihr verbundene Haltestangen 15.

Das vordere Schaumteil 5 ist mit dem rückwärtigen Schaumteil 7 über eine Nut-Feder-Verbindung zusammengefügt. Partiell wird die Verbindung durch Rastelemente gesichert. Diese Rastelemente sind vorrangig im unteren Bereich der verbundenen Schaumteile angeordnet, während im oberen Bereich Klebeverbindungen bevorzugt werden.

Nachdem das vordere Schaumteil 5 mit dem rückwärtigen Schaumteil 7 zu einem Hohlkörper zusammengefügt ist, wird dieser von oben her auf die in der Zeichnung nicht dargestellte Tragstruktur der Fahrzeugsitzlehne 3 aufgesteckt. Beim Aufstecken greifen die Haltestangen 15 der Kopfstütze 13 in zugeordnete Aufnahmeteile an der Tragstruktur ein, so dass eine gute Krafteinleitung gegeben ist.

## Patentansprüche

1. Fahrzeugsitzlehne (3) mit einer Tragstruktur, mit mindestens einem an der Tragstruktur festgelegtem Schaumteil (5, 7) und mit einem Aufnahmeteil für die Halteelemente (15) einer Kopfstütze (13), **dadurch gekennzeichnet, dass** ein vorderes Schaumteil (5) mit einem rückwärtigen, die Kopfstütze (13) und die Halteelemente (15) umfassenden Schaumteil (7) verbunden ist, derart, dass der durch die Schaumteile (5, 7) gebildete Hohlkörper von oben her auf die Tragstruktur der Fahrzeugsitzlehne (3) aufsteckbar ist, wobei beim Aufstecken die Halteelemente (15) der Kopfstütze (13) in zugeordnete Aufnahmeteile an der Tragstruktur eingreifen.

2. Fahrzeugsitzlehne nach Anspruch 1, **dadurch gekennzeichnet, dass** das vordere Schaumteil (5) mit dem rückwärtigen Schaumteil (7) zumindest abschnittsweise über eine Nut-Feder-Verbindung zusammengefügt ist.

3. Fahrzeugsitzlehne nach einem der Ansprüche 1 oder 2, **dadurch gekennzeichnet, dass** das vordere Schaumteil (5) an dem rückwärtigen Schaumteil (7) durch mindestens eine Rastverbindung gehalten ist.

4. Fahrzeugsitzlehne nach einem der Ansprüche 1 bis 3, **dadurch gekennzeichnet, dass** das vordere Schaümteil (5) mit dem rückwärtigen Schaumteil (7) über gemeinsame Anlageflächen zumindest abschnittsweise verklebt ist.

5. Fahrzeugsitzlehne nach Anspruch 4, **dadurch gekennzeichnet, dass** die vorderen und rückwärtigen Schaumteile (5, 7) in ihren oberen Bereichen verklebt sind und die beiden Schaumteile (5, 7) in den sich nach unten anschließenden Bereichen durch Rastverbindungen fixiert sind.

6. Fahrzeugsitzlehne nach einem der Ansprüche 1 bis 5, **dadurch gekennzeichnet, dass** zur Bildung einer starren Kopfstütze ein flächiges Plattenteil im oberen Abschnitt des rückwärtigen Schaumteiles (7) mit eingeschäumt ist.

7. Fahrzeugsitzlehne nach einem der Ansprüche 1 bis 6, **dadurch gekennzeichnet, dass** der vordere Schaumkörper (5) Bereiche (9,11) unterschiedlicher Schaumhärte umfasst.

## Claims

1. Backrest of a vehicle seat (3) having a support structure, with at least one foam part (5, 7) fixed to the support structure and with a holder part for the holding elements (15) of a headrest (13), **characterised in that** a front foam part (5) is connected to a rear foam part (7) comprising the headrest (13) and the holding elements (15) in such a way that the hollow body formed by the foam parts (5, 7) can be put on the support structure of the backrest of the vehicle seat (3) from the top, in which the holding elements (15) of the headrest (13) engage in the holder parts on the support structure when it is put on.

2. Backrest of a vehicle seat according to claim 1, **characterised in that** the front foam part (5) is joined together with the rear foam part (7) at least in sections using a grooved and tongued joint.

3. Backrest of a vehicle seat according to claims 1 or 2, **characterised in that** the front foam part (5) is held on the rear foam part (7) by at least one latch connection.

4. Backrest of a vehicle seat according to one of claims 1 to 3, **characterised in that** the front foam part (5) is stuck to the rear foam part (7) at least in sections using common contact surfaces.

5. Backrest of a vehicle seat according to claim 4, **characterised in that** the front and rear foam parts (5, 7) are stuck in the top areas and both foam parts (5, 7) are fixed in the areas connecting below by latch connections.

6. Backrest of a vehicle seat according to one of claims 1 to 5, **characterised in that** a flat plate part is also covered in foam in the top area of the rear foam part (7) to form a rigid headrest.

7. Backrest of a vehicle seat according to one of claims 1 to 6, **characterised in that** the front foam body (5) comprises areas (9, 11) of differing foam hardness.

## Revendications

1. Dossier de siège de véhicule (3) comprenant une structure de support, comprenant au moins une partie en mousse (5, 7) fixée à la structure de support et comprenant une partie de réception pour les éléments de retenue (15) d'un appuie-tête (13), **caractérisé en ce qu'**une partie en mousse avant (5) est reliée à une partie en mousse arrière (7) comportant l'appuie-tête (13) et les éléments de retenue (15), de telle sorte que le corps creux formé par les parties en mousse (5, 7) peut être monté depuis le dessus sur la structure de support du dossier de siège de véhicule (3), les éléments de retenue (15) de l'appuie-tête (13) se mettant en prise dans des parties de réception associées sur la structure de support lors du montage.

2. Dossier de siège de véhicule selon la revendication 1, **caractérisé en ce que** la partie en mousse avant (5) est assemblée au moins par sections à la partie en mousse arrière (7) par une liaison à rainure et languette.

3. Dossier de siège de véhicule selon la revendication 1 ou 2, **caractérisé en ce que** la partie en mousse avant (5) est maintenue sur la partie en mousse arrière (7) par au moins un assemblage encliquetable.

4. Dossier de siège de véhicule selon l'une des revendications 1 à 3, **caractérisé en ce que** la partie en mousse avant (5) est collée au moins par sections à la partie en mousse arrière (7) par des surfaces d'appui communes .

5. Dossier de siège de véhicule selon la revendication 4, **caractérisé en ce que** les parties en mousse avant et arrière (5, 7) sont collées dans leurs zones supérieures et les deux parties en mousse (5, 7) sont fixées dans les zones raccordées vers le bas par des assemblages encliquetables.

6. Dossier de siège de véhicule selon l'une des revendications 1 à 5, **caractérisé en ce qu'**une partie de plaque plane est noyée dans la mousse dans la section supérieure de la partie en mousse arrière (7), pour former un appuie-tête rigide.

7. Dossier de siège de véhicule selon l'une des revendications 1 à 6, **caractérisé en ce que** le corps en mousse avant (5) comporte des zones (9, 11) présentant une dureté de mousse différente.
